(19) Europäisches Patentamt

European Patent Office

Office européen des brevets

(11) **EP 1 257 149 B1**

(12) **EUROPÄISCHE PATENTSCHRIFT**

(45) Veröffentlichungstag und Bekanntmachung des Hinweises auf die Patenterteilung:
**07.09.2005 Patentblatt 2005/36**

(51) Int Cl.⁷: **H04R 19/00**, G01L 1/14

(21) Anmeldenummer: **02009487.6**

(22) Anmeldetag: **25.04.2002**

(54) **Bewegliche elektrostatische Elektrode jenseits ihrer Instabilität ( pull-in ) durch geschaltete Stromquelle**

Movable eletrostatic electrode beyond its instability ( pull-in ) by switched current source

Electrode electrostatique mobile au-delà de son instabilité ( pull-in ) par une source de courant commutée

(84) Benannte Vertragsstaaten:
**DE FR GB IT NL**

(30) Priorität: **11.05.2001 DE 10122912**

(43) Veröffentlichungstag der Anmeldung:
**13.11.2002 Patentblatt 2002/46**

(73) Patentinhaber: **Infineon Technologies AG**
**81669 München (DE)**

(72) Erfinder:
- **Nadal Guardia, Rafael, Dr.**
**81549 München (DE)**
- **Aigner, Robert, Dr.-Ing.**
**81675 München (DE)**

(74) Vertreter: **Schoppe, Fritz**
**Patentanwälte**
**Schoppe, Zimmermann, Stöckeler & Zinkler**
**Postfach 246**
**82043 Pullach bei München (DE)**

(56) Entgegenhaltungen:
**US-A- 4 193 063**

- **JOSEPH I. SEEGER AND BERNHARD E. BOSER: "Dynamics and control of parallel plate actuators beyond the electrostatic instability" PROC. OF THE 10TH INTL. CONF. ON SOLID STATE SENSORS AND ACTUATORS ( TRANSDUCERS 99 ), 7. - 10. Juni 1999, Seiten 474-477, XP001080626 Sendai (JP)**

## Beschreibung

Die vorliegende Erfindung bezieht sich auf Vorrichtungen und Verfahren zum Erzeugen einer vorbestimmten Positionsbeziehung zweier zueinander beweglicher Elektroden und insbesondere solche Vorrichtungen und Verfahren, bei denen eine vorbestimmte Positionsbeziehung zweier zueinander beweglicher Elektroden unter Verwendung einer Ladungssteuerung erreicht wird. Derartige Vorrichtungen und Verfahren sind insbesondere in Verbindung mit kapazitiven Sensoren oder mikromechanischen Betätigungsgliedern vorteilhaft einsetzbar.

Mikromechanische Strukturen, bei denen die vorliegende Erfindung Anwendung findet, umfassen zwei zueinander parallele Elektroden, von denen üblicherweise eine stationär und eine beweglich ist. Das Verhalten einer derartigen Struktur hängt von vier unterschiedlichen Kräften ab: einer Rückstellkraft, die bei einer Auslenkung auf die bewegliche Elektrode ausgeübt wird; einer elektrostatischen Kraft, die durch Ladungen auf den Kondensatorplatten zwischen denselben erzeugt wird; einer externen mechanischen Kraft, die auf die bewegliche Elektrode einwirken kann; und einer Dämpfungskraft, die durch eine Reibung mit der umgebenden Atmosphäre erzeugt wird.

Eine solche Struktur kann vorteilhaft als kapazitiver Sensor eingesetzt werden, wobei derartige kapazitive Sensoren weit verbreitet Anwendung unter anderem in Mikrophonen und Drucksensoren finden. Bei derartigen Sensoren wird die bewegliche Elektrode aus der "Ruheposition", die durch die mechanische Lagerung derselben geliefert wird und einem unausgelenkten Zustand entspricht, elektrisch in einen vorbestimmten Abstand bezüglich der stationären Elektrode vorgespannt, was ein Auslesen des Sensorsignals um den Vorspannungspunkt ermöglicht.

Aus dem Stand der Technik sind mehrere Techniken bekannt, um ein solches Auslesen von kapazitiven Sensoren durchzuführen. Bestimmte dieser Techniken basieren auf der Verwendung von geschalteten Kondensatoren, auf einer Spannungsvorspannung unter Verwendung eines Vorverstärkers mit hoher Eingangsimpedanz oder der Verwendung von Stromquellen, um eine Oszillation der Schaltung zu bewirken.

Bei der Verwendung geschalteter Kondensatoren wird das Erfassungselement mittels einer gewünschten Spannung vorgespannt, wobei eine Ladungsänderung aufgrund einer physikalischen Anregung, d. h. einer zu erfassenden externen Anregung, quantifiziert wird. Diesbezüglich sei beispielsweise auf Larry K. Baxter, Capacitive Sensors, IEEE Press, Series on Electronics Technology, 1997, S. 49-60, S. 147-197 und S. 221-225, verwiesen. Eine weitere mögliche Konfiguration basiert auf einem Schmitt-Trigger-Oszillator, bei dem Stromquellen verwendet werden, um eine Rampe zu erzeugen. Die Hysterese, die durch den Schmitt-Trigger geliefert wird, bewirkt, daß ein rückgekoppelter Ringoszillator mit einer Frequenz schwingt, die eine Funktion der Schwellenspannungen des Triggers, der Amplitude der Stromquelle und der Kapazität, die durch den Kondensator des kapazitiven Sensors geliefert wird, abhängt. Bezüglich dieser Technik sei auf S.M. SZE, Semiconductor Sensors, John Wiley & Sons Inc., 1994, S. 499-502, verwiesen.

Eine weitere Technik, die verbreitet bei Mikrophonen verwendet wird, besteht aus dem Vorspannen des kapazitiven Mikrophons mittels einer Spannungsquelle und einem seriell dazu geschalteten Widerstand, wobei sich das System wie eine Stromquelle verhält, wenn hohe Ohm sche Widerstände verwendet werden. T. Bourouina, S. Spirkovitch, F. Baillieu, C. Vauge, "A new condenser microphone with a p+ silicon membrane", Sensors and Actuators A, 31, 1992, S. 149-152; W. Kühnel, G. Hess, "Micromachined subminiature condenser microphones in silicon", Sensors and Actuators A, 32, 1992, S. 569-564; und A.G.H. Van der Donk, J.A. Voorthuyzen, P. Bergveld, "General Considerations of Noise in Microphone Preamplifiers", Sensors and Actuators A, 25-27, 1991, S. 515-520, lehren eine solche Vorgehensweise.

Bei allen oben genannten Techniken ist die Vorspannung der beweglichen Elektrode, d. h. die Auslenkung derselben in den Arbeitspunkt, maximal auf den sogenannten Pull-In-Abstand begrenzt. Dieser Pull-In-Abstand ist der, bei dem in bekannter Weise eine Pull-In-Instabilität auftritt, bei der die elektrostatische Anziehung zwischen den Elektroden, möglicherweise zusammen mit einer extern ausgeübten Kraft, die durch die gefederte Lagerung der beweglichen Elektrode gelieferte Rückstellkraft übersteigen kann, so daß ein Kollabieren der Struktur stattfinden kann, d. h. die bewegliche Elektrode in Berührung mit der stationären Elektrode gelangt. Diese Pull-In-Instabilität begrenzt bei einem typischen Aufbau die Steuerung der Position zwischen einer Verschiebung von Null und einem Drittel des Abstands, der zwischen den Elektroden, wenn diese in einem unausgelenkten Zustand sind, vorliegt. Bei allen oben genannten Techniken zum Auslesen eines kapazitiven Sensors ist die Verschiebung der beweglichen Elektrode maximal auf eine Verschiebung bis zum Pull-In-Abstand begrenzt, weshalb die Empfindlichkeit solcher kapazitiver Sensoren begrenzt ist.

Unter Verwendung einer Ladungssteuerung wäre es möglich, die bewegliche Platte des Sensors nach dem Pull-In-Punkt zu fixieren, wodurch die Empfindlichkeit erhöht werden könnte.

Bei R. Puers, D. Lapadatu, "Electrostatic forces and their effects on capacitive mechanical sensors", Sensors and Actuators A 56, S. 203-210, 1996, ist beschrieben, daß zwei unterschiedliche Antriebsmodi bzw. Steuerungsmodi verwendet werden können, um die Kapazität eines solchen kapazitiven Sensors zu erfassen, nämlich ein Q-Antrieb, bei dem der Kondensator mit einer konstanten Ladung vorgespannt wird, und einen V-Antrieb, bei dem der Kondensator mit einer konstanten Spannung vorgespannt wird. Wie eine Ladungs-Steuerung zu realisieren ist, ist dieser Schrift nicht zu entnehmen, wobei, um die Effekte der elektrischen Anziehungskraft zu vermeiden, eine symmetrische Struktur vorgeschlagen wird, bei der zwei entgegengesetzte elektrostatische Kräfte auf die bewegliche Elektrode wirken.

M. Bao, H. Yang, H. Yin, S. Shen, "Effects of electrostatic forces generated by the driving signal on capacitive sensing devices", Sensors and Actuators 84, S. 213-219, 2000 behandeln die Wirkungen der elektrostatischen Kräfte, die durch das Treibersignal bei kapazitiven Erfassungselementen erzeugt werden, wobei dort als Treibersignal eine Spannung betrachtet wird, deren Frequenz viel größer als die Frequenz des zu messenden Signals und die natürliche Schwingfrequenz der mechanischen Struktur ist. Um die Pull-In-Problematik in den Griff zu bekommen, schlägt diese Schrift ebenfalls vor, einen doppelseitigen Antrieb mit elektromechanischen Rückkopplung vorzusehen.

Eine Reihe von Druckschriften beschäftigt sich schließlich mit elektrostatisch betätigten mikromechanischen Aktoren, die eine starke Auslenkung des Aktors ermöglichen. Zu diesem Zweck lehren E.K. Chan, R.W. Dutton, "Electrostatic Micromechanical Actuator with Extended Range of Travel", Journal of Microelectromechanical Systems, Bd. 9, Nr. 3 (2000), S. 321-328 das Vorsehen eines mit dem elektrostatischen Betätigungsglied seriell verbundenen Kondensators, um den effektiven elektrischen Abstand des Aktors zu vergrößern, während ein Spannungsantrieb verwendet wird. Ein vergleichbares Vorgehen ist bei J.I. Seeger and S.B. Crary, "Stabilization of Electrostatically Actuated Mechanical Devices", 1997 Intl. Conf. On Solid-State Sensors and Actuators (Transducers '97), Chicago II, USA, S. 1133-1136, beschrieben. Bei diesem Lösungsansatz unter Verwendung eines Serienkondensators muß eine viel höhere Spannung an das Bauelement angelegt werden als bei einer direkten Spannungssteuerung ohne Serienkondensator.

Aus der Schrift J.I. Seeger and B.E. Boser, "Dynamics and Control of Parallel-Plate Actuators beyond the Electrostatic Instability", Proc. of the 10th. Intl. Conf. On Solid-State Sensors and Actuators (Transducers '99), Sendai, Japan, 7-10 Juni 1999, ist eine Schaltkondensatortechnik bekannt, um die Ladung in dem Aktor, d. h. der beweglichen Elektrode einer Parallelplattenstruktur, zu steuern. Bei diesem Lösungsansatz müssen Probleme bezüglich parasitärer Kapazitäten, eines Taktdurchgriffs und Leckspannungen in den Schaltern berücksichtigt werden, die verwendet sind, um die Schaltkondensatortechnik zu implementieren. Gemäß dieser Schrift wird während einer ersten Phase Ladung auf die bewegliche Elektrode eines mikromechanischen Aktors aufgebracht, während während einer zweiten Phase die Ladung auf dem Kondensator abgetastet wird. Der Kondensator des Aktuators ist zwischen den Ausgang und den Eingang eines Differenzverstärkers geschaltet, wobei mit dem Eingang des Differenzverstärkers ferner ein Rückkopplungskondensator mit konstanter Kapazität verbunden ist. Eine Spannungsquelle ist über einen Schalter mit dem Rückkopplungskondensator verbunden. Bei einer solchen Konfiguration ist die Spannung über dem Aktorkondensator proportional zu dem Abstand zwischen den Platten desselben, während der Aktorkondensator und der Rückkopplungskondensator stets seriell verbunden sind, so daß sich ein Spannungsgleichgewicht zwischen denselben durch einen Ladungsfluß zwischen den beiden Kondensatoren einstellt. Aufgrund der Ladungsverstärkerkonfiguration unter Verwendung des Rückkopplungskondensators kann dadurch die bewegliche Elektrode an Positionen jenseits des Pull-In-Abstands bei stabilen Betriebsspannungen fixiert werden.

Die Aufgabe der vorliegenden Erfindung besteht darin, Vorrichtungen und Verfahren zu schaffen, die die Realisierung von kapazitiven Sensoren und mikromechanischen Aktoren hoher Empfindlichkeit unter Verwendung einfacher Treiberschaltungen und Ausleseschaltungen ermöglichen.

Diese Aufgabe wird durch eine Vorrichtung nach Anspruch 1 und ein Verfahren nach Anspruch 15 gelöst.

Die vorliegende Erfindung schafft eine Vorrichtung zum Erzeugen eines vorbestimmten Abstands zwischen sich gegenüberliegenden Elektroden, die derart gelagert sind, daß der Abstand zwischen denselben abhängig von auf dieselben aufgebrachten Ladungen variabel ist, mit folgenden Merkmalen:

einer Stromquelle zum Aufbringen von Ladungen auf zumindest eine der Elektroden; und

eine Schalteinrichtung zum Zuschalten der Stromquelle für eine vorbestimmte Zeitdauer, um eine solche vorbestimmte Ladungsmenge auf die Elektrode aufzubringen, daß sich der vorbestimmte Abstand zwischen den Elektroden einstellt, und zum Abschalten der Stromquelle, so daß mit Ausnahme von Leckströmen keine Ladungen von der Elektrode abfließen können oder auf die Elektroden fließen können.

Ferner schafft die vorliegende Erfindung ein Verfahren zum Erzeugen eines vorbestimmten Abstands zwischen sich gegenüberliegenden Elektroden, die derart gelagert sind, daß der Abstand zwischen denselben abhängig von auf dieselben aufgebrachten Ladungen variabel ist, mit folgenden Schritten:

Zuschalten einer Stromquelle für eine vorbestimmte Zeitdauer, um eine solche vorbestimmte Ladungsmenge auf zumindest eine der Elektroden aufzubringen, daß sich der vorbestimmte Abstand zwischen den Elektroden einstellt; und

Abschalten der Stromquelle, so daß mit Ausnahme von Leckströmen keine Ladungen von der Elektrode abfließen können oder auf die Elektrode fließen können.

Die vorliegende Erfindung basiert auf der Erkenntnis, daß es unter Verwendung von Strompulsen möglich ist, die bewegliche Elektrode einer Parallelplattenstruktur aus beweglicher Elektrode und stationärer Elektrode in eine stabile Position jenseits des Pull-In-Abstands zu bringen. Zu diesem Zweck ist die in den Sensor eingebrachte Ladung vorzugsweise unter Steuerung der Amplitude und der Dauer des injizierten Strompulses fixiert. Durch die Steuerung dieser Ladung wird auch die Position gesteuert. Da die elektrostatische Anziehungskraft zwischen den Elektroden von den auf die Elektroden aufgebrachten Ladungen, bei konstanten aufgebrachten Ladungen jedoch nicht vom Abstand zwischen den Elektroden abhängt, kann die bewegliche Elektrode nach dem Pull-In-Abstand positioniert werden. Bei typischen mikromechanischen Aufbauten derartiger Parallelplattenstrukturen beträgt dieser Pull-In-Abstand etwa ein Drittel des Abstands, der bei unausgelenkter beweglicher Elektrode vorliegt. Da erfindungsgemäß die Ladung in dem Sensor mit Ausnahme von Leckströmen festgelegt ist, kann bei Verwendung der Struktur als kapazitiver Sensor einfach die über den Elektroden vorliegende Spannung als Ausgangssignal verwendet werden. Die Spannung kann dann in einfacher Weise durch einen Spannungsfolger abgegriffen werden.

Um einer ungewünschten Bewegung der beweglichen Elektrode aufgrund von Leckströmen zu begegnen, wird erfindungsgemäß vorzugsweise ein Auffrischzyklus implementiert, bei dem die Ladung von dem Sensor beseitigt und nachfolgend wieder injiziert wird, um die Elektrode wieder in der ursprünglichen stabilen Stellung zu positionieren. Messungen werden dann in dem Fenster durchgeführt, das zwischen den Auffrischzyklen definiert ist. Bei Verwendung der vorliegenden Erfindung in Zusammenhang mit kapazitiven Sensoren kann daher von einer Technik mit geschaltetem Strom gesprochen werden.

Die vorliegende Erfindung ermöglicht somit sowohl bei Verwendung in Zusammenhang mit mikromechanischen Aktoren als auch mit kapazitiven Sensoren die bewegliche Elektrode nach dem Spannungs-Pull-In-Punkt stabil zu positionieren. Wie oben erläutert wurde, kann bei Verwendung einer Spannungssteuerung die Elektrode jenseits dieses Pull-In-Punkts nicht positioniert werden, da andernfalls ein Kollabieren der Struktur stattfinden würde. Die erfindungsgemäße Verwendung von Strompulsen zur Ladungssteuerung ermöglicht bei Sensoranwendungen die Definition von Fenstern, innerhalb derer Messungen durchgeführt werden. Ferner ermöglicht die Verwendung von geschalteten Strömen ein Auffrischen der Ladung und somit ein Auffrischen der Position der beweglichen Elektrode und ein einfaches Auslesen des Spannungssignals mit einer hohen Empfindlichkeit.

Die vorliegende Erfindung ermöglicht eine Erhöhung der Empfindlichkeit kapazitiver Sensoren, die dadurch erreicht wird, daß die Elektroden mit einem geringeren Abstand zwischen denselben positioniert werden können, weil die Pull-In-Instabilität nicht auftritt. Ferner nimmt, wie in der detaillierten Beschreibung näher erläutert wird, die sich bei der vorliegenden Erfindung zwischen den Elektroden entwickelnde Spannung jenseits des Pull-In-Abstands ab, so daß die hohe Empfindlichkeit ohne irgendeinen Spannungsnachteil erreicht werden kann.

Die vorliegende Erfindung gibt erstmals eine Möglichkeit an, wie kapazitive Sensoren der beschriebenen Art in einem Post-Pull-In-Modus betrieben werden können, und wie ein Auslesen von in einem solchen Modus betriebenen kapazitiven Sensoren erfolgen kann.

Bei einer Verwendung der vorliegenden Erfindung in Zusammenhang mit mikromechanischen Aktoren liefert dieselbe die Möglichkeit einer stabilen Positionierung der beweglichen Elektrode, während große Auslenkungen erreicht werden können.

Weiterbildungen der vorliegenden Erfindung sind in den abhängigen Ansprüchen dargelegt.

Bevorzugte Ausführungsbeispiele der vorliegenden Erfindung werden nachfolgend bezugnehmend auf die beiliegenden Zeichnungen näher erläutert. Es zeigen:

Fig. 1        eine schematische Darstellung eines kapazitiven Sensors unter Verwendung der vorliegenden Erfindung;

Fig. 2        ein schematisches Diagramm der sich zwischen den Elektroden entwickelnden Spannung;

Fig. 3a      und 3b Diagramme, die schematisch Verschiebungen und Spannungen an einer Pre-Pull-In-Position und einer Post-Pull-In-Position zeigen;

Fig. 4a,     4b, 5a und 5b Ausschnitte des in Fig. 3b gezeigten Spannungsdiagramms; und

Fig. 6        eine schematische Teilansicht eines alternativen kapazitiven Sensors unter Verwendung der vorliegenden Erfindung.

Im folgenden werden bevorzugte Ausführungsbeispiele der vorliegenden Erfindung anhand kapazitiver Sensoren näher erläutert. Die vorliegende Erfindung ist jedoch in gleicher Weise auf mikromechanische Betätigungsglieder bzw. Aktoren anwendbar.

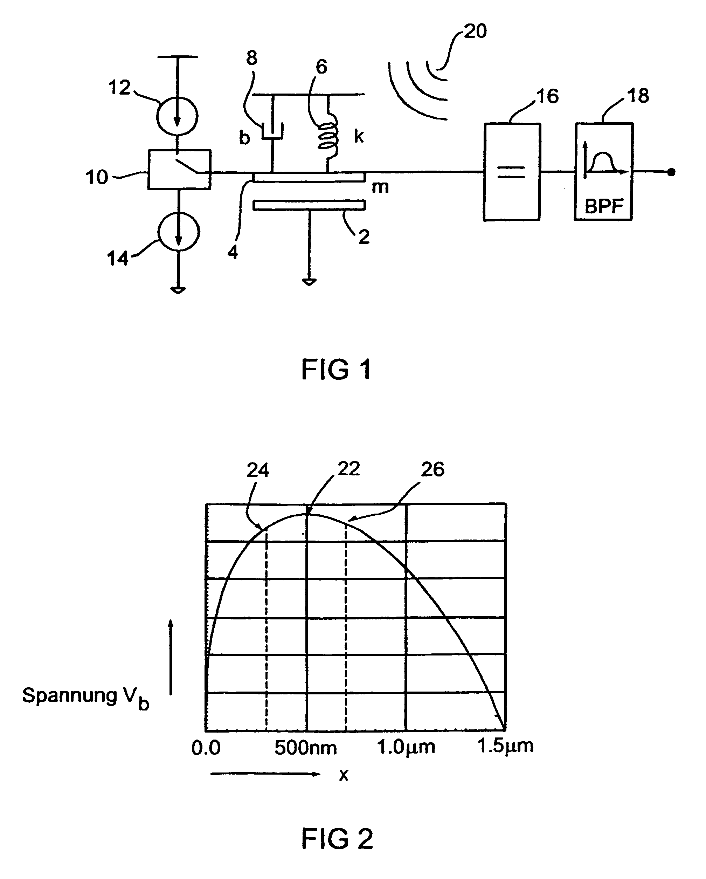

Ein bevorzugtes Ausführungsbeispiel eines erfindungsgemäßen Sensors ist in Fig. 1 dargestellt, bei der schematisch eine mikromechanische Struktur, die einen kapazitiven Sensor bildet, durch eine stationäre Elektrode 2 und eine bewegliche Elektrode 4 dargestellt ist. Die stationäre Elektrode 2 und die bewegliche Elektrode 4 können eine herkömmliche Parallelplattenstruktur sein, die unter Verwendung herkömmlicher mikromechanischer Verfahren hergestellt ist. Die stationäre Elektrode 2 ist bei dem dargestellten Ausführungsbeispiel elektrisch mit einem vorbestimmten Potential, in der Regel Masse, verbunden. Die bewegliche Elektrode 4 besitzt eine Masse m, die in üblicher Weise beispielsweise durch membranartige Strukturen (nicht gezeigt) gegenüber der stationären Elektrode 2 gelagert ist. Dadurch ergibt sich eine gefederte und gedämpfte Lagerung, wie in Fig. 1 durch die Andeutung eines Federglieds 6 mit einer Federkonstanten k und die Andeutung eines Dämpfungsglieds 8 mit einer Dämpfungskonstante b gezeigt ist.

Die bewegliche Elektrode 4 ist bei dem gezeigten Ausführungsbeispiel nun über eine Schalteinrichtung 10 mit einer ersten Stromquelle 12 und einer zweiten Stromquelle 14 verbindbar. Die erste Stromquelle 12 kann als Ladungsaufbringungsquelle bezeichnet werden, während die zweite Stromquelle 14 als Entladungseinrichtung bezeichnet werden kann. Die Stromquellen 12 und 14 sind ausgebildet, um Ströme mit entgegengesetzten Vorzeichen zu liefern.

Ferner ist die bewegliche Elektrode 4 mit einem Spannungsfolger 16 verbunden, dem bei dem gezeigten Ausführungsbeispiel ein Bandpaßfilter 18 nachgeschaltet ist. Ferner sind in Fig. 1 Schallwellen 20, die eine externe, auf die bewegliche Elektrode 4 wirkende Kraft darstellen, gezeigt.

Um die bewegliche Elektrode 4 in eine stabile Position zu bringen, wird erfindungsgemäß unter Verwendung der Stromquelle 12 eine vorbestimmte Ladungsmenge auf die bewegliche Elektrode 4 aufgebracht. Zu diesem Zweck wird für eine vorbestimmte Zeitdauer ein Zuschalten der Stromquelle 12 durch die Schaltungseinrichtung bewirkt, die einen Strom vorbestimmter Amplitude liefert, so daß die vorbestimmte Ladungsmenge auf die bewegliche Elektrode 4 aufgebracht wird. Durch diese aufgebrachte Ladung findet eine konstante elektrostatische Anziehung zwischen den Elektroden 2 und 4 statt, der zum einen die Rückstellkraft der Feder 6 und zum anderen die Dämpfung des schematisch dargestellten Dämpfungsglieds 8 entgegenwirkt. Durch das sich einstellende Kräftegleichgewicht, nimmt die bewegliche Elektrode 4 eine stabile Vorspannungsposition ein, die von der Menge der aufgebrachten Ladungen abhängt.

Wird nun eine externe Kraft, beispielsweise durch die Schallwellen 20 auf die bewegliche Elektrode ausgeübt, ändert sich das Kräfteverhältnis und somit die Position der beweglichen Elektrode. Diese Positionsänderung der beweglichen Elektrode kann als Spannungsänderung durch den Spannungsfolger 16 erfaßt werden und stellt ein Maß für das zu erfassende externe Signal dar. Bei Verwendung des kapazitiven Sensors als Mikrophon ist dem Spannungsfolger 16 vorzugsweise das Filter 18, in der Regel ein Bandpaßfilter, nachgeschaltet, das eine Filtercharakteristik aufweist, die die Frequenzanteile der zu erfassenden Signale passieren läßt und die durch Leckströme bedingte Komponenten herausfiltert.

Aufgrund der Verwendung von Strompulsen, um die stabile Position der beweglichen Elektrode einzustellen, ermöglicht die vorliegende Erfindung ein sehr einfaches Auslesen des Spannungssignals. Aufgrund der injizierten Vorspannungsladung entwickelt sich zwischen den Elektroden 2 und 4 eine definierte Gleichspannung $V_b$ gemäß der folgenden Gleichung:

$$C = \frac{Q_b}{V_b} = \varepsilon_o \frac{A}{D_b} \Rightarrow V_b = D_b \varepsilon_o \frac{Q_b}{A} \qquad\qquad \text{Gl.1}$$

wobei C die Kapazität zwischen den Elektroden 2 und 4 darstellt; $Q_b$ die auf die Elektrode 4 aufgebrachte Ladungsmenge darstellt; $V_b$ die sich zwischen den Elektroden entwickelnde Spannung darstellt; $\varepsilon_0$ die elektrische Feldkonstante ist; A die Fläche der Elektroden ist; und $D_b$ den Abstand zwischen den Elektroden darstellt.

Wirkt nun ein externes Signal auf die bewegliche Elektrode 4 erzeugt dies aufgrund der konstanten Ladung eine Abstandsänderung d zwischen den Elektroden, was eine Änderung der erfaßten Spannung um v zur Folge hat, wie sich aus der folgenden Gleichung 2 ergibt:

$$C = \frac{Q}{V_b + v} = \varepsilon_o \frac{A}{D_b + d} \Rightarrow (V_b + v) = (D_b + d)\varepsilon_o \frac{Q}{A} \Rightarrow v = d\varepsilon_o \frac{Q}{A} \qquad\qquad \text{Gl.2}$$

Es ist zu erkennen, daß die Spannungsänderung v proportional zu der Abstandsänderung d, die durch das externe Anregungssignal bewirkt wird, ist, was ein einfaches Auslesen des externen Signals ermöglicht. Das Auslesen erfolgt durch den Spannungsfolger, der den Spannungsabfall zwischen den Elektroden 2 und 4 erfaßt.

Unter idealen, in der Praxis nicht zu erreichenden Verhältnissen, würde es ausreichen, die vorbestimmte Spannungsmenge lediglich einmal auf die bewegliche Elektrode aufzubringen. Jedoch treten in der Praxis parasitäre Kapazitäten sowie nicht unendlich hohe Eingangswiderstände hinsichtlich der Schalteinrichtung 10 und des Spannungsfolgers 16 auf, so daß Leckströme berücksichtigt werden müssen. Diese Leckströme bewirken ein langsames Abfließen von Ladungen von der beweglichen Elektrode 4. Dieses langsame Abfließen von Ladungen aufgrund der Leckströme führt zu einer unerwünschten Bewegung der beweglichen Elektrode, so daß die Position derselben von der stabilen Position abweicht und sich somit die tatsächliche Empfindlichkeit von der theoretischen Empfindlichkeit an der stabilen Position unterscheidet. Diesen Leckströmen kann Rechnung getragen werden, indem nach dem anfänglichen Aufbringen der vorbestimmten Ladungsmenge auf die bewegliche Elektrode 4 jeweils zu vorbestimmten Zeitpunkten ein solcher Strompuls der beweglichen Elektrode 4 durch die Schalteinrichtung 10 zugeführt wird, daß der durch Leckströme abgeflossene Ladungsanteil mittels dieses Strompulses wieder auf die bewegliche Elektrode aufgebracht wird.

Erfindungsgemäß ist es jedoch bevorzugt, einen Auffrischzyklus durchzuführen, bei dem die Ladung von der Elektrode 4 zunächst vollständig entfernt und nachfolgend wieder aufgebracht wird, um die ursprüngliche Position der Elektrode, d. h. die stabile Position, bei der die Messungen erfolgen sollen, wiederherzustellen. Zu diesem Zweck ist bei dem in Fig. 1 dargestellten Ausführungsbeispiel die zweite Stromquelle 14 vorgesehen, die zum Entladen der beweglichen Elektrode 4 dient. Der durch diese Stromquelle gelieferte Strom besitzt ein Vorzeichen, das umgekehrt zu dem Vorzeichen des durch die Stromquelle 12 gelieferten Stroms ist. Erfindungsgemäß wird somit zunächst eine vorbestimmte Ladungsmenge durch Zuschalten der Stromquelle 12 auf die bewegliche Elektrode 4 aufgebracht, nachfolgend kann in einem definierten Fenster eine Signalerfassung unter Verwendung des Spannungsfolgers 16 erfolgen, woraufhin ein Auffrischzyklus durchgeführt wird, um den auftretenden Leckströmen Rechnung zu tragen. In diesem Auffrischzyklus wird zunächst unter Verwendung der Schalteinrichtung 10 die Stromquelle 14 zum Entladen der beweglichen Elektrode 4 zugeschaltet, woraufhin mittels der Schalteinrichtung 10 die Stromquelle 12 zugeschaltet wird, um wiederum die vorbestimmte Ladungsmenge auf die bewegliche Elektrode 4 aufzubringen.

Die aufzubringende Ladung kann ohne weiteres basierend auf der folgenden Gleichung eines eindimensionalen konzentrierten Modells des kapazitiven Sensors, das die auftretenden parasitären Kapazitäten berücksichtigt, berechnet werden:

$$Q = \sqrt{2\varepsilon_o Ak}\sqrt{D_1\left(1 + \frac{C_o}{C_p}\left(1 - \frac{D_1}{D_o}\right)\right)} \qquad \text{Gl. 3}$$

wobei Q die aufzubringende Ladung ist, $D_1$ den Abstand zwischen den beiden Elektroden im ausgelenkten Zustand angibt, $D_0$ den Abstand zwischen den Elektroden im unausgelenkten Zustand angibt, $C_0$ die Kapazität zwischen den Elektroden im unausgelenkten Zustand ist, und Cp die parasitären Kapazitäten angibt.

Diese erforderlich Ladung wird unter Verwendung eines Konstantstrompulses, der für eine begrenzte Zeit angelegt wird, injiziert. Wenn daher eine bestimmte Amplitude des Ladungs- bzw. Entladungs-Stroms durch die Stromquellen geliefert wird, muß nur die erforderliche Zeitdauer des Strompulses auf der Grundlage folgender Gleichung berechnet werden:

$$t = \frac{Q}{I} = \frac{\sqrt{2\varepsilon_o Ak}\sqrt{D_1\left(1 + \frac{C_o}{C_p}\left(1 - \frac{D_1}{D_o}\right)\right)}}{I} \qquad \text{Gl. 4}$$

wobei t die Dauer des Strompulses und I die Amplitude des Strompulses ist.

Die durch den kapazitiven Sensor erzeugte Signalausgabe wird erfindungsgemäß vorzugsweise weiterverarbeitet, um trotz der verwendeten Auffrischzyklen den Einfluß einer Bewegung aufgrund von Leckströmen zu beseitigen. Da die Leckströme reproduzierbar sind, können sie aus der Signalausgabe herausgerechnet werden. Andererseits ist es möglich, den Effekt der Bewegung aufgrund der Leckströme, der sehr niederfrequent ist, unter Verwendung eines Hochpaßfilters bzw. Bandpaßfilters, dessen Durchlaßbereich die Frequenzbereiche der zu erfassenden Signale beinhaltet, beseitigt werden.

Im folgenden wird anhand eines spezifischen Ausführungsbeispiels bzw. mittels per Simulation erhaltener Ergebnisse gezeigt, wie erfindungsgemäß die Empfindlichkeit eines kapazitiven Sensors erhöht werden kann, so daß das Verhalten eines kapazitiven Sensors verbessert werden kann. Dieses bevorzugten Ausführungsbeispiel wird anhand eines kapazitiven Mikrophons erläutert. Wie oben erwähnt, wird das physikalische Signal durch das Messen der dadurch bewirkten Wechselsignalspannung über den Elektroden erfaßt, wobei vorzugsweise eine Bandpaßfilterung durchgeführt wird, um den Einfluß von Änderungen bezüglich der stabilen Position auf das Ausgangssignal aufgrund von Leckströmen zu eliminieren.

Zur Simulation wurde ein Modell eines kapazitiven Sensors vom Typ eines Parallelplattenkondensators mit kreisförmigen Elektroden verwendet. Der Abstand zwischen der festen und der beweglichen Elektrode im unausgelenkten Zustand ($D_0$) beträgt 1,5 um. Der Durchmesser der Elektroden beträgt 1 mm, so daß die Elektrodenfläche 0,79 $mm^2$ beträgt. Bei einer solchen Struktur wurde ein Pull-In-Spannungswert von 7 V gemessen, so daß ein direktes Anlegen einer Spannung von mehr als 7 V das Kollabieren der beiden Elektroden bewirkt. Ferner bewirkt das Anlegen einer Spannung von 7 V, daß sich die bewegliche Elektrode um eine Strecke von einem Drittel des Abstands im unausgelenkten Zustand bewegt, d. h. bei der betrachteten Struktur tritt eine Verschiebung x um 500 nm auf. Für diese Struktur beträgt die Kapazität $C_o$ zwischen den Platten 4,64 pF. Ferner wurde eine parasitäre Kapazität von 2 pF und ein wirksamer Parallelwiderstand von 0,1 TΩ gemessen. Dieser Widerstand trägt zusammen mit der parasitären Kapazität zu den Leckströmen, die die bewegliche Elektrode entladen, bei. Für das verwendete System wurde eine mechanische Resonanzfrequenz, d. h. eine mechanische Resonanzfrequenz für die bewegliche Elektrode zusammen mit dem Aufhängungssystem derselben, von 124,2 kHz gemessen. Die Federkonstante k beträgt 350 N/m, die Dämpfungskonstante b beträgt 5,5 x $10^{-3}$ Ns/m und die Masse m des beweglichen Teils beträgt 7,32 x $10^{-10}$ Kg.

Zur Simulation des Verhaltens eines solchen kapazitiven Sensors wurde ein eindimensionales konzentriertes Modell der kapazitiven Struktur verwendet, das jedoch erweitert wurde, um einen Ausdruck, der sich auf den externen Druck, d. h. die zu erfassenden physikalische Größe, bezieht, zu beinhalten:

$$mx''+bx'+kx = \frac{Q^2}{2\varepsilon A} + F_{Schall} \qquad \text{Gl.5}$$

wobei

$$F_{Schall} = P_{Platte} \cdot A \qquad \text{Gl.6}$$

wobei b die Dämpfungskonstante auf der Grundlage von Luft zwischen den Elektroden ist, $F_{Schall}$ die durch die Schallwelle auf die Elektrode wirkende Kraft ist und $P_{Platte}$ der durch die Schallwelle auf der beweglichen Elektrode erzeugte Druck ist.

Das Verhalten eines kapazitiven Sensors der oben beschriebenen Struktur wurde unter Verwendung des in Gleichung 5 dargestellten Modells simuliert. Dabei ist zu bemerken, daß sich bei dem erfindungsgemäßen Lösungsansatz die Gleichspannung zwischen den Elektroden frei entsprechend der Ladungsinjektion entwickeln kann. Die sich dabei zwischen den Elektroden entwickelnde Spannung $V_b$ ist in Fig. 2 gezeigt. In Fig. 2 ist über der Ordinate die Spannung $V_b$ aufgetragen, während über der Abszisse die Auslenkung x beginnend mit einer Auslenkung von 0 dargestellt ist.

Wie dem Diagramm von Fig. 2 zu entnehmen ist, nimmt die sich entwickelnde Spannung $V_b$ mit zunehmender in den kapazitiven Sensor eingebrachten Ladung bis zu einer Position im Bereich von einem Drittel des unausgelenkten Abstands, 500 nm bei dem gezeigten Beispiel, zu. In Fig. 2 ist dieser Pull-In-Punkt mit dem Bezugszeichen 22 bezeichnet. Werden Ladungsmengen aufgebracht, die eine Auslenkung der beweglichen Elektrode über den Pull-In-Punkt hinaus bewirken, nimmt die sich entwickelnde Spannung mit zunehmender Auslenkung ab, bis zu einem Wert von 0 am rechten Rand des Diagramms von Fig. 2. Einem identischen Spannungsabfall über dem kapazitiven Sensor können somit jeweils zwei unterschiedliche Auslenkungen bzw. Positionen zugeordnet werden, eine vor dem Pull-In-Punkt 22 und eine nach dem Pull-In-Punkt 22. Zwei derartige Punkte sind in Fig. 2 mit den Bezugszeichen 24 und 26 bezeichnet, wobei 24 eine Vor-Pull-In-Position angibt, während 26 eine Nach-Pull-In-Position angibt.

Der in Fig. 2 gezeigten Spannung Vb, die sich aufgrund einer auf die bewegliche Elektrode aufgebrachten vorbestimmten Ladung entwickelt, überlagert sich nun ein Wechselspannungssignal, das durch die zu erfassende physikalische Größe, nämlich die Schallwelle 20 erzeugt wird. Wie im folgenden gezeigt wird, ist die Empfindlichkeit des kapazitiven Sensors größer, wenn die jenseits der Pull-In-Position 22 liegende Nach-Pull-In-Position 26 zur Signalerfassung verwendet wird.

Wie vorher bereits dargelegt wurde, ist die Signalspannung proportional zu der Abstandsänderung, die durch das externe Anregungssignal erzeugt wird. Bei der durchgeführten Simulation wurde die akustische Impedanz eingestellt, um einen typischen Empfindlichkeitswert für Mikro-Mikrophone, die auf Silizium implementiert sind, zu ergeben, nämlich 10 nm/Pa. Ferner wurde davon ausgegangen, daß die externe Schallwelle einen Druck von 0,01 Pa erzeugt, einem typischerweise bei einem Gespräch zwischen zwei Personen auftretenden Wert. Um nun zu zeigen, wie die Empfindlichkeit durch das erfindungsgemäße Verfahren erhöht wird, wurde die bewegliche Elektrode an zwei unterschiedlichen Positionen plaziert, eine mit einer Auslenkung von weniger als einem Drittel des Abstands $D_0$, beispielsweise dem Punkt 24, und die andere mit einer Auslenkung von mehr als einem Drittel des Abstands $D_0$, beispielsweise der Position 26.

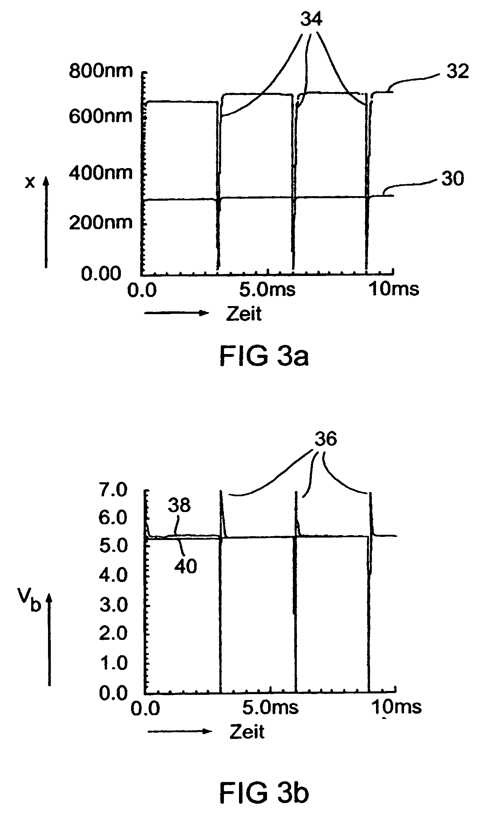

Die sich für die Vor-Pull-In-Position 24 ergebende Auslenkung ist für mehrere Auffrischzyklen in Fig. 3a als Kurve 30 über der Zeit dargestellt. Die entsprechende Nach-Pull-In-Auslenkung ist als Kurve 32 in Fig. 3a gezeigt. Wie zu erkennen ist, beträgt die Auslenkung bei der Kurve 30 etwa 300 nm, während die Auslenkung bei der Kurve 32 etwa 700 nm beträgt. Jeweilige Auffrischzyklen, wie sie oben beschrieben wurden, sind in Fig. 3a mit dem Bezugszeichen 34 bezeichnet. An dieser Stelle sei angemerkt, daß Abweichungen von der oben angegebenen Auslenkung nach unterschiedlichen Auffrischzyklen simulationsbedingte Abweichungen darstellen.

In Fig. 3b sind schematisch die sich entwickelnden Spannungen dargestellt, wobei diese Figur lediglich zeigen soll, daß außerhalb der Auffrischzyklen durch die unterschiedlichen Positionen ein im wesentlichen identischer Spannungsabfall zwischen den Elektroden entwickelt wird. Die Spannungseinbrüche bzw. Spannungsspitzen an den Punkten 36 sind wiederum durch die Auffrischzyklen bedingt. Mit dem Bezugszeichen 38 ist in Fig. 3b die der Position 26 zugeordnete Spannungskurve bezeichnet, während mit dem Bezugszeichen 40 die der Position 24 zugeordnete Spannungskurve bezeichnet ist.

An dieser Stelle sei angemerkt, daß ein Messen der zu erfassenden physikalischen Größe jeweils zwischen diesen Auffrischzyklen, also dort wo der Abstand zwischen den Elektroden bzw. die zwischen denselben entwickelte Spannung im wesentlichen konstant sind, stattfindet.

Die beiden Positionen wurden gewählt, um im wesentlichen die gleiche entwickelte Spannung zu ergeben, um überprüfen zu können, daß die Empfindlichkeit für Positionen jenseits der Pull-In-Position 22 ohne Spannungsnachteil erhöht ist.

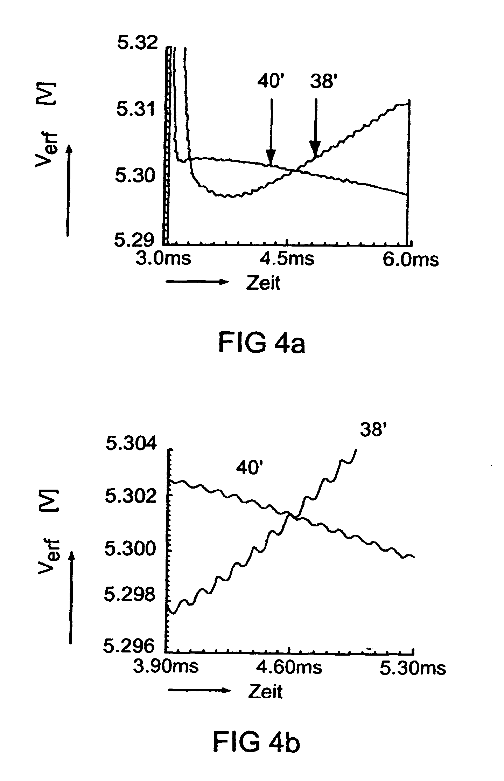

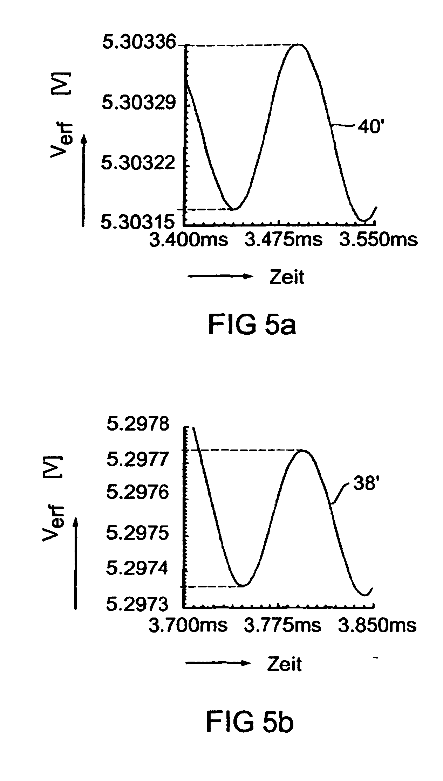

Vergrößerte Darstellungen vorbestimmter Zeitabschnitte mit einem überlagernden Wechselanteil aufgrund einer externen Schallwelle sind in den Fig. 4a, 4b, 5a und 5b gezeigt, wobei die sich ergebende Gesamtspannung als $V_{erf}$ bezeichnet ist. Wie dem der Nach-Pull-In-Position 26 zugeordneten Spannungsverlauf 38' zu entnehmen ist, nimmt der Gleichspannungsanteil aufgrund des auftretenden Leckstroms zu. Im Gegensatz dazu nimmt bei dem der Vor-Pull-In-Position 24 zugeordneten Spannungsverlauf 40' der Gleichspannungsanteil aufgrund des gleichen Leckstroms ab, so daß dieser Leckstrom hier einen gegenteiligen Einfluß hat. Dieses Verhalten erklärt sich ohne weiteres aus Fig. 2, die zeigt, daß die entwickelte Spannung über dem kapazitiven Sensor hinsichtlich ihrer Neigung vor und nach dem Pull-In-Abstand entgegengesetzte Vorzeichen hat. Eine weitere Vergrößerung der Spannungsverläufe 38' und 40' zwischen den Zeitpunkten 3,9 ms und 5,3 ms ist in Fig. 4b gezeigt. Schließlich sind weitere Vergrößerungen der Signalverläufe in getrennten Darstellungen in den Fig. 5a und 5b gezeigt. Wie den in Fig. 5a gezeigten Spannungsverlauf 40' zu entnehmen ist, wird an der Vor-Pull-In-Position eine Amplitude des Wechselsignalanteils von näherungsweise 0,2 mV erhalten, was bei einer angenommenen externen Signalstärke von 0,01 Pa eine Empfindlichkeit von 20 mV/Pa ergibt. Bei dem der Nach-Pull-In-Position zugeordneten Spannungsverlauf 38' in Fig. 5b ergibt sich eine Amplitude des Wechselsignalanteils von näherungsweise 0,4 mV, was bei der angenommenen Signalstärke von wiederum 0,01 Pa eine Empfindlichkeit von näherungsweise 40 mV/Pa ergibt. Somit erhält man bei der Post-Pull-In-Position, die durch die vorliegende Erfindung bei kapazitiven Sensoranwendungen verwendbar ist, eine deutlich erhöhte Empfindlichkeit.

Bei der durchgeführten Simulation wurden Spannungsimpulse einer Amplitude von 2 Mikroampere mit einer Dauer von 40 μs verwendet.

Die Wiederholfrequenz der Auffrischzyklen hängt dabei von der Höhe der auftretenden Leckströme ab, wobei bei höheren Leckströmen eine höhere Wiederholrate zu verwenden ist.

Ferner ist es bevorzugt, die jeweiligen Auffrischzyklen, d.h. das Entladen und das darauffolgende Beladen der beweglichen Elektrode, schneller durchzuführen als die mechanische Konstante des Systems, die vom Aufbau der kapazitiven Struktur abhängt, ist. Somit ist es bevorzugt das Entladen und Beladen der kapazitiven Struktur mit sehr schnellen Strompulsen einer sehr hohen Amplitude durchzuführen. Zu diesem Zweck muß das zeitliche Ansprechverhalten der Stromquellen schneller sein als die mechanische Zeitkonstante der beweglichen Elektrode. Wird der Auffrischzyklus schneller durchgeführt als das mechanische Ansprechen des Systems ist, wird, wenn die gesamte Ladung beseitigt und nachfolgend wiederum injiziert wird, keine Bewegung der beweglichen Elektrode erzeugt. Lediglich die Spannung wird sich abhängig von der Ladung ändern.

Zur Durchführung der erfindungsgemäßen Verfahrens ist eine Vielzahl bekannter Stromquellen verwendbar.

Hinsichtlich der in Fig. 1 gezeigten ersten und zweiten Stromquellen 12 und 14 ist anzumerken, daß bei bevorzugten Ausführungsbeispielen der Erfindung diese Stromquellen derart ausgeführt sind, daß, wenn beide Stromquellen "abgeschaltet" sind, die Leckströme derselben sich gegenseitig auslöschen. In so einem Fall kann, sobald die Ladung in die bewegliche Elektroden injiziert wurde und beide Quellen mittels der Schalteinrichtung 10 von der beweglichen Elektrode getrennt wurden, d. h. dieselben ausgeschaltet wurden, ein Leckstrom, der von der Aufladungsstromquelle kommt, durch den Leckstrom, der zu der Entladungsstromquelle fließt, teilweise oder vollständig kompensiert werden. Der einzig verbleibende Strom in oder aus der beweglichen Elektrode, d. h. die einzigen Ladungen, die auf die bewegliche Elektroden fließen bzw. von der derselben abfließen, ist die Differenz zwischen den zwei Leckströmen. An einem bestimmten Spannungsarbeitspunkt ist diese Differenz Null und die gesamten Leckströme durch die bewegliche Elektroden sind kompensiert. Dieser Kompensationspunkt kann durch einen geeigneten Entwurf der Abmessungen der Transistoren der Treiberstufen der Stromquellen eingestellt werden.

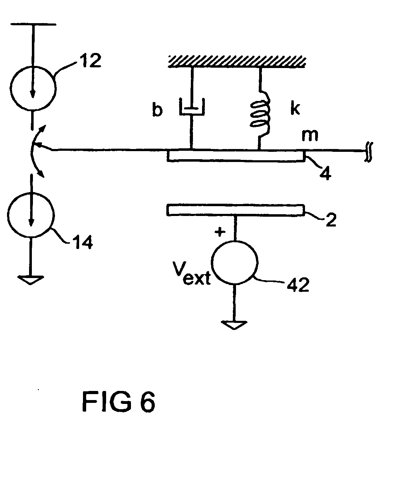

Eine weitere Möglichkeit zur Einstellung dieses "Arbeitspunktes" in spannungsmäßiger Hinsicht besteht darin, eine Spannungsquelle 42, wie sie in Fig. 6 gezeigt ist, zwischen die stationäre Elektrode 2 und Masse zu schalten, um eine Spannung $V_{ext}$ zu erzeugen, durch die der spannungsmäßige Arbeitspunkt, bei dem eine vollständige Leckstromkompensation stattfindet, einzustellen.

Als Stromquellen für die erfindungsgemäßen Vorrichtungen bzw. Verfahren können beliebige bekannte Stromquellen verwendet werden. Die zu verwendenden Stromquellen besitzen jedoch vorzugsweise ein oder mehrere der folgenden Eigenschaften. Die Stromquellen sollen vorzugsweise eine geringe parasitäre Ausgangskapazität aufweisen, um eine Reduzierung der maximalen stabilen Auslenkung zu verhindern. An dieser Stelle sei angemerkt, daß eine Auslenkung über den folgenden maximalen Bereich durchgeführt werden kann, so lange $Cp \leq 2\ C_o$ gilt:

$$x_{\mathbf{max}} = \frac{D_o}{3}\left(1 + \frac{C_o}{C_p}\right) \qquad\qquad \text{Gl. 7}$$

Ferner sind vorzugsweise Stromquellen mit einem hohen Ausgangswiderstand zu verwenden, um sicherzustellen, daß innerhalb des gesamten auftretenden Spannungsbereichs ein konstanter Strom injiziert wird. Eine Stromquelle mit einem geringen Ausgangswiderstand würde hingegen abhängig von der Betriebsspannung an ihrem Ausgang einen unterschiedlichen Ausgangsstrom liefern. Wie oben ausgeführt wurde, sollte das zeitliche Ansprechverhalten der Stromquelle ferner schneller sein als die mechanische Zeitkonstante der beweglichen Elektrode. Ferner kann die Stromquelle vorzugsweise eine Beladungs- und Entladungs-Programmierbarkeit besitzen, so daß anstelle der getrennten Stromquellen 12 und 14 eine gemeinsame Stromquelle verwendet werden kann, die entsprechend angesteuert werden kann, um je nach Bedarf eine Beladung bzw. Entladung der beweglichen Elektrode zu liefern.

Geeignete erfindungsgemäß verwendbare Stromquellen sind Kaskodenstromspiegel, Wilson-Stromspiegel, geregelte Kaskodenstromspiegel und dergleichen. Im Rahmen der Simulation wurden geregelte CMOS-Kaskodenstromspiegel verwendet, um die Stromquellen zu implementieren.

Obwohl entsprechend den beschriebenen Ausführungsbeispielen Ladungen auf die bewegliche Elektrode aufgebracht wurden, ist es in gleicher Weise möglich, Ladungen unter Verwendung von Strompulsen auf die stationäre Elektrode oder auf beide Elektroden aufzubringen.

Die vorliegende Erfindung liefert somit Verfahren und Vorrichtungen, die es ermöglichen, die bewegliche Elektrode einer Parallelplatten-Struktur stabil an einer Position jenseits der Pull-In-Instabilitäts-Position anzuordnen, indem Strompulse, d. h. geschaltete Ströme, verwendet werden. Dadurch ist es insbesondere bei Verwendung der Parallelplatten-struktur als kapazitiver Sensor möglich, eine erhöhte Empfindlichkeit zu erhalten und gleichzeitig ein einfaches Auslesen zu ermöglichen.

**Patentansprüche**

1. Vorrichtung zum Erzeugen eines vorbestimmten Abstands zwischen sich gegenüberliegenden Elektroden (2, 4), mit folgenden Merkmalen: den sich gegenüberliegenden Elektroden (2, 4), die derart gelagert sind, daß der Abstand zwischen denselben abhängig von auf dieselben aufgebrachten Ladungen variabel ist;

   einer Stromquelle (12) zum Aufbringen von Ladungen auf zumindest eine der Elektroden (4); und

   eine Schalteinrichtung (10) zum Zuschalten der Stromquelle (12) für eine vorbestimmte Zeitdauer, um eine solche vorbestimmte Ladungsmenge auf die Elektrode (4) aufzubringen, daß sich der vorbestimmte Abstand zwischen den Elektroden (2, 4) einstellt, und zum Abschalten der Stromquelle (12), so daß mit Ausnahme von Leckströmen keine Ladungen von der Elektrode (4) abfließen können oder auf die Elektrode (4) fließen können.

2. Vorrichtung nach Anspruch 1, bei der die Stromquelle (12) zum Aufbringen von Ladungen eine geringe parasitäre Ausgangskapazität und einen hohen Ausgangswiderstand aufweist.

3. Vorrichtung nach Anspruch 1 oder 2, bei der die Stromquelle (12) durch einen Kaskodenstromspiegel, einen Wilson-Stromspiegel oder einen geregelten Kaskodenstromspiegel gebildet ist.

4. Vorrichtung nach Anspruch 1, die ferner folgende Merkmale aufweist:

eine Entladungseinrichtung (14) zum Entfernen von Ladungen von der einen Elektrode (4); und

eine Schalteinrichtung (10) zum Zuschalten und Abschalten der Entladungseinrichtung (14).

5. Vorrichtung nach Anspruch 4, bei der die Entladungseinrichtung (14) eine Stromquelle ist.

6. Vorrichtung nach Anspruch 4 oder 5, bei der die Stromquelle (12) zum Aufbringen von Ladungen auf die Elektrode (4) programmierbar ist, um auch die Entladungseinrichtung zu bilden.

7. Vorrichtung nach Anspruch 6, die ferner eine Steuereinrichtung zum zyklischen Zuschalten und Abschalten der Stromquelle (12) und der Entladungseinrichtung (14) aufweist.

8. Vorrichtung nach Anspruch 7, bei der die Steuereinrichtung einen jeweiligen Zyklus aus Zuschalten der Entladungseinrichtung (14), Abschalten derselben, Zuschalten der Stromquelle (12) und Abschalten derselben schneller durchführt als die mechanische Konstante der zueinander beweglichen Elektroden (2, 4) ist.

9. Vorrichtung nach einem der Ansprüche 4 bis 8, bei der die Entladungseinrichtung (14) eine Stromquelle ist, und bei der im wesentlichen identische Leckströme entgegengesetzten Vorzeichens durch die Stromquelle (12) zum Aufbringen von Ladungen und die Stromquelle (14) zum Entfernen von Ladungen fließen, wenn dieselben abgeschaltet sind und die vorbestimmte Ladungsmenge auf die Elektrode (4) aufgebracht ist.

10. Vorrichtung nach Anspruch 9, bei der eine Spannungsquelle (42) mit der anderen Elektrode (2) verbunden ist, um einen Spannungsabfall zwischen den Elektroden zu bewirken, bei dem die im wesentlichen identischen Leckströme entgegengesetzten Vorzeichens auftreten.

11. Vorrichtung nach einem der Ansprüche 1 bis 10, bei der sich für jeden eingestellten Abstand eine zugeordnete zwischen den Elektroden (2, 4) anliegende Spannung entwickelt und bei der durch die vorbestimmte Ladungsmenge ein Abstand (26) zwischen den Elektroden (2, 4) eingestellt wird, der der kleinere von zwei Abständen (24, 26) ist, die der gleichen sich zwischen den Elektroden (2, 4) entwickelnden Spannung zugeordnet sind.

12. Vorrichtung nach einem der Ansprüche 1 bis 11, bei der die eine Elektrode (4) die bewegliche Elektrode eines kapazitiven Sensors ist, wobei die Vorrichtung ferner einen Spannungsfolger (16) zum Abgreifen der zwischen den Elektroden (2, 4) anliegenden Spannung aufweist.

13. Vorrichtung nach Anspruch 12, bei der die zwischen den Elektroden (2, 4) anliegende Spannung abgegriffen wird, wenn die Stromquelle (12) abgeschaltet ist.

14. Vorrichtung nach Anspruch 12 oder 13, die ferner eine Einrichtung (18) zum Filtern des Ausgangssignals des Spannungsfolgers (16), um durch Leckströme bedingte Signalkomponenten zu eliminieren, aufweist.

15. Verfahren zum Erzeugen eines vorbestimmten Abstandes zwischen sich gegenüberliegenden Elektroden (2, 4), die derart gelagert sind, daß der Abstand zwischen denselben abhängig von auf dieselben aufgebrachten Ladungen variabel ist, mit folgenden Schritten:

Zuschalten einer Stromquelle (12) für eine vorbestimmte Zeitdauer, um eine solche vorbestimmte Ladungsmenge auf zumindest eine der Elektroden (4) aufzubringen, daß sich der vorbestimmte Abstand zwischen den Elektroden (2, 4) einstellt; und

Abschalten der Stromquelle (12), so daß mit Ausnahme von Leckströmen keine Ladungen von der Elektrode (4) abfließen können oder auf die Elektrode (4) fließen können.

16. Verfahren nach Anspruch 15, bei dem die Schritte des Zuschaltens und Abschaltens der Stromquelle (12) wiederholt werden, wobei zwischen zwei aufeinanderfolgenden Wiederholungen ein Schritt des Entfernens von Ladungen von der zumindest einen Elektrode (4) durchgeführt wird.

17. Verfahren nach Anspruch 16, bei dem jeweils ein Schritt des Entfernens von Ladungen und nachfolgende Schritte des Zuschaltens und Abschaltens der Stromquelle (12) schneller durchgeführt als die mechanische Konstante der zueinander beweglichen Elektroden (2, 4) ist.

18. Verfahren nach einem der Ansprüche 15 bis 17, bei dem sich für jeden eingestellten Abstand eine zugeordnete zwischen den Elektroden (2, 4) anliegende Spannung entwickelt und bei dem durch die vorbestimmte Ladungsmenge ein Abstand (26) zwischen den Elektroden eingestellt wird, der der kleinere von zwei Abständen (24, 26) ist, die der gleichen sich zwischen den Elektroden entwickelnden Spannung zugeordnet sind.

19. Verfahren gemäß einem der Ansprüche 15 bis 18, das ferner den Schritt des Abgreifens einer zwischen den Elektroden (2, 4) anliegenden Spannung nach dem Schritt des Abschaltens der Stromquelle (12) aufweist.

**Claims**

1. Apparatus for generating a predetermined distance between opposing electrodes (2, 4), comprising:

   the opposing electrodes (2, 4), supported such that the distance therebetween is variable depending on charges applied thereto;

   a current source (12) for applying charges to at least one of the electrodes (4); and

   switching means (10) for switching in the current source (12) for a predetermined time duration to apply such a predetermined amount of charge to the electrode (4) so that the predetermined distance between the electrodes (2, 4) develops, and for switching off the current source (12) so that, apart from leakage currents, no charges can flow from the electrode (4) or flow to the electrode (4).

2. Apparatus of claim 1, wherein the current source (12) for applying charges comprises a small parasitic output capacity and a high output resistance.

3. Apparatus of claim 1 or 2, wherein the current source (12) is comprised by a cascode current mirror, a Wilson current mirror, or a regulated cascode current mirror.

4. Apparatus of claim 1, further comprising:

   discharge means (14) for removing charges from the one electrode (4); and
   switching means (10) for switching in and switching off the discharge means (14).

5. Apparatus of claim 4, wherein the discharge means (14) is a current source.

6. Apparatus of claims 4 or 5, wherein the current source (12) for applying charges to the electrode (4) is programmable to also form the discharge means.

7. Apparatus of claim 6, further comprising control means for cyclically switching in and switching off the current source (12) and the discharge means (14).

8. Apparatus of claim 7, wherein the control means performs a respective cycle of switching in the discharge means (14), switching it off, switching in the current source (12), and switching it off more quickly than the mechanical constant of the electrodes (2, 4) movable with respect to each other.

9. Apparatus of one of claims 4 to 8, wherein the discharge means (14) is a current source, and wherein substantially identical leakage currents of opposite sign flow through the current source (12) for applying charges and the current source (14) for removing charges, when the same are switched off and the predetermined amount of charge is applied to the electrode (4).

10. Apparatus of claim 9, wherein a voltage source (42) is connected to the other electrode (2) to cause a voltage drop between the electrodes, in which the substantially identical leakage currents of opposite sign occur.

11. Apparatus of one of claims 1 to 10, wherein an associated voltage present between the electrodes (2, 4) develops for each adjusted distance, and wherein, by the predetermined amount of charge, a distance (26) between the electrodes (2, 4) is adjusted, which is the smaller one of two distances (24, 26) associated with the same voltage developing between the electrodes (2, 4).

12. Apparatus of one of claims 1 to 11, wherein the one electrode (4) is the movable electrode of a capacitive sensor, wherein the apparatus further comprises a voltage follower (16) for tapping the voltage present between the electrodes (2, 4).

13. Apparatus of claim 12, wherein the voltage present between the electrodes (2, 4) is tapped when the current source (12) is switched off.

14. Apparatus of claims 12 or 13, further comprising means (18) for filtering the output signal of the voltage follower (16) to eliminate signal components caused by leakage currents.

15. Method of generating a predetermined distance between opposing electrodes (2, 4), supported such that the distance between them is variable depending on the charges applied thereto, comprising:

   switching in a current source (12) for a predetermined time duration, in order to apply such a predetermined amount of charge to at least one of the electrodes (4) so that the predetermined distance between the electrodes (2, 4) arises; and

   switching off the current source (12) so that, except for leakage currents, no charges can flow from the electrode (4) or flow to the electrode (4).

16. Method of claim 15, wherein the steps of switching in and switching off the current source (12) are repeated, wherein between two successive repetitions a step of removing charges from the at least one electrode (4) is performed.

17. Method of claim 16, wherein a step of removing charges and subsequent steps of switching in and switching off the current source (12) are each performed more quickly than the mechanical constant of the electrodes (2, 4) movable with respect to each other.

18. Method of one of claims 15 to 17, wherein an associated voltage present between the electrodes (2, 4) develops for each adjusted distance, and wherein, by the predetermined amount of charge, a distance (26) between the electrodes is adjusted, which is the smaller one of two distances (24, 26) associated with the same voltage developing between the electrodes.

19. Method of one of claims 15 to 18, further comprising the step of tapping a voltage present between the electrodes (2, 4) after the step of switching off the current source (12).

**Revendications**

1. Dispositif d'obtention d'une distance déterminée à l'avance entre des électrodes (2, 4) opposées ayant les caractéristiques suivantes :

   les électrodes (2, 4) opposées qui sont montées de façon que la distance entre elles soit variable en fonction de charges qui leur sont appliquées ;
   une source (12) de courant d'application de charges à au moins l'une des électrodes (4) ; et
   un dispositif (10) de commutation pour connecter la source (12) de courant pendant une durée déterminée à l'avance, afin d'appliquer une quantité de charge déterminée à l'avance à l'électrode (4), de façon à régler la distance déterminée à l'avance entre les électrodes (2, 4), et pour déconnecter la source (12) de courant, de sorte qu'à l'exception de courant de fuite, les charges ne peuvent pas sortir de l'électrode (4) ou ne peuvent pas aller à l'électrode (4).

**2.** Dispositif suivant la revendication 1, dans lequel la source (12) de courant pour l'application de charges a une capacité de sortie parasite petite et une grande résistance de sortie.

**3.** Dispositif suivant la revendication 1 ou 2, dans lequel la source (12) de courant est formée par un miroir de courant cascode, par un miroir de courant Wilson ou par un miroir de courant cascode régulé.

**4.** Dispositif suivant la revendication 1, qui a en outre les caractéristiques suivantes :

un dispositif (14) de décharge pour enlever des charges de l'une des électrodes (4) ; et
un dispositif (10) de commutation pour connecter et déconnecter le dispositif (14) de décharge.

**5.** Dispositif suivant la revendication 4, dans lequel le dispositif (14) de décharge est une source de courant.

**6.** Dispositif suivant la revendication 4 ou 5, dans lequel la source (12) de courant peut être programmée pour appliquer des charges à l'électrode (4) afin de former aussi le dispositif de décharge.

**7.** Dispositif suivant la revendication 6, qui a en outre un dispositif de commande pour la connexion et la déconnexion cycliques de la source (12) de courant et du dispositif (14) de décharge.

**8.** Dispositif suivant la revendication 7, dans lequel le dispositif de commande effectue plus rapidement un cycle respectif constitué de la connexion du dispositif (14) de décharge, de la déconnexion de celui-ci, de la connexion de la source (12) de courant et de la déconnexion de celle-ci que la constante mécanique des électrodes (2, 4) mobiles entre elles.

**9.** Dispositif suivant l'une des revendications 4 à 8, dans lequel le dispositif (14) de décharge est une source de courant et dans lequel il passe des courants de fuite sensiblement identiques de signes opposés dans la source (12) de courant pour appliquer des charges et dans la source (14) de courant pour enlever des charges lorsque celles-ci sont déconnectées et lorsque la quantité de charge donnée à l'avance est appliquée à l'électrode (4).

**10.** Dispositif suivant la revendication 9, dans lequel une source (42) de tension est reliée à l'autre électrode (2) pour provoquer une fuite de tension entre les électrodes, pour laquelle apparaissent les courants de fuite sensiblement identiques de signes opposés.

**11.** Dispositif suivant l'une des revendications 1 à 10, dans lequel, pour chaque distance réglée, il est développé une tension associée appliquée entre les électrodes (2, 4) et pour lequel, par la quantité de charge déterminée à l'avance, il est réglé une distance (26) entre les électrodes (2, 4) qui est la plus petite de deux distances (24, 26) qui sont associées à la même tension développée entre les électrodes (2, 4).

**12.** Dispositif suivant l'une des revendications 1 à 11, dans lequel l'une des électrodes (4) est l'électrode mobile d'un capteur capacitif, le dispositif comportant en outre un suiveur (16) de tension pour prélever la tension appliquée entre les électrodes (2, 4).

**13.** Dispositif suivant la revendication 12, dans lequel la tension appliquée entre les électrodes (2, 4) est prélevée lorsque la source (12) de courant est déconnectée.

**14.** Dispositif suivant la revendication 12 ou 13, qui comprend en outre un dispositif (18) de filtrage du signal de sortie du suiveur (16) de tension pour éliminer des composantes de signal dues à des courants de fuite.

**15.** Procédé d'obtention d'une distance déterminée à l'avance entre deux électrodes (2, 4) opposées qui sont montées de façon à ce que la distance entre elles soit variable en fonction de charges qui leur sont appliquées, comprenant les stades suivants :

connexion d'une source (12) de courant pour une durée déterminée à l'avance pour appliquer une quantité de charge déterminée à l'avance à au moins l'une des électrodes (4), de façon à régler la distance déterminée à l'avance entre les électrodes (2, 4) ; et
déconnexion de la source (12) de courant, de façon à ce qu'à l'exception de courants de fuite, des charges ne puissent pas sortir de l'électrode (4) ou ne puissent pas aller à l'électrode (4).

**16.** Procédé suivant la revendication 15, dans lequel on répète les stades de la connexion et de la déconnexion de la source (12) de courant en effectuant entre deux répétitions successives un stade d'élimination de charges de la au moins une électrode (4).

**17.** Procédé suivant la revendication 16, dans lequel on effectue respectivement un stade d'élimination de charges et des stades suivants de connexion et de déconnexion de la source (12) de courant plus rapidement que la constante mécanique des électrodes (2, 4) mobiles l'une par rapport à l'autre.

**18.** Procédé suivant l'une des revendications 15 à 17, dans lequel il est développé, pour chaque distance réglée, une tension associée appliquée entre les électrodes (2, 4) et dans lequel il est réglé, par la quantité de charge déterminée à l'avance, une distance (26) entre les électrodes qui est la plus petite de deux distances (24, 26) qui sont associées à la même tension développée entre les électrodes (2, 4).

**19.** Procédé suivant l'une des revendications 15 à 18, qui comporte en outre le stade de prélèvement d'une tension s'appliquant à des électrodes (2, 4) après le stade de déconnexion de la source (12) de courant.

FIG 1

Spannung $V_b$

0.0   500nm   1.0μm   1.5μm

x

FIG 2

FIG 3a

FIG 3b

FIG 4a

FIG 4b

FIG 5a

FIG 5b

FIG 6